Europäisches Patentamt

European Patent Office

Office européen des brevets

(11) Veröffentlichungsnummer: **0 304 906**

**A2**

(12) **EUROPÄISCHE PATENTANMELDUNG**

(21) Anmeldenummer: **88113842.4**

(22) Anmeldetag: **25.08.88**

(51) Int. Cl.⁴: **H01R 23/10 , H01R 9/22 , H05B 3/70**

(30) Priorität: **27.08.87 DE 3728528**

(43) Veröffentlichungstag der Anmeldung:
**01.03.89 Patentblatt 89/09**

(84) Benannte Vertragsstaaten:
**AT CH DE ES FR GB GR IT LI SE**

(71) Anmelder: **E.G.O. Elektro-Geräte Blanc u. Fischer**
**Rote-Tor-Strasse Postfach 11 80**
**D-7519 Oberderdingen(DE)**

(72) Erfinder: **Kicherer, Robert**
**Amselrain 47**
**D-7519 Oberderdingen(DE)**
Erfinder: **Schreder, Felix**
**Uhlandstrasse 8/1**
**D-7519 Oberderdingen(DE)**
Erfinder: **Reif, Stefan**
**Mozartstrasse 36**
**D-7519 Oberderdingen(DE)**

(74) Vertreter: **Patentanwälte RUFF, BEIER und SCHÖNDORF**
**Neckarstrasse 50**
**D-7000 Stuttgart 1(DE)**

(54) **Elektrokochplatten-Anschlussstück.**

(57) Für den insbesondere vollautomatisierten elektrischen Anschluß von Elektrokochplatten (2) an Anschlußleitungen (15) ist ein Anschlußstück (1) mit einem Isolierkörper (18) vorgesehen, der außerhalb zweier voneinander abgekehrter Endflächen (25, 26) quer zu seiner Haupt-Längsrichtung liegende stiftförmige Anschlußteile (20, 21) derart aufweist, daß diese kreuzend zu den mit ihnen zu verbindenden, ankommenden Anschlußteilen (16, 17) liegen und mit diesen in Verbindungstellen (22, 23) durch Punktschweißung sicher verbunden werden können. An den Endflächen (25, 26) sind außerdem Zentrierausnehmungen (32) bzw. Leit- und Ausrichtflächen (35, 36) für die ankommenden Anschlußteile (16, 17) vorgesehen, so daß sich beim Zusammenführen eine selbstausrichtende Wirkung ergibt.

FIG. 11

# Elektrokochplatten-Anschlußstück

Die Erfindung betrifft ein Elektrokochplatten-Anschlußstück nach dem Oberbegriff des Anspruches 1.

Insbesondere bei Elektrokochplatten, aber auch bei ähnlichen anderen, elektrisch zu betreibenden Baueinheiten besteht zunehmend das Bedürfnis nach einer weitestgehend automatisierten Montage beispielsweise mit Hilfe von Handhabungsautomaten. Hierfür konnten recht gute Ergebnisse durch die Ausbildung nach der ED-OS 35 40 815 und nach der DE-OS 35 40 816 erzielt werden, bei welchen die Anschlußteile nach Art von Steckverbindern zusammengefügt werden. Ein wesentliches Problem bei der Verbindung von Anschlußteilen besteht darin, diese möglichst einfach und kompakt auszubilden und dennoch so zusammenführen zu können, daß eine einwandfreie elektrisch leitende Verbindung geschaffen werden kann. Der Erfindung liegt die Aufgabe zugrunde, ein Anschlußstück der bezeichneten Art zu schaffen, dessen Anschlußteil bzw. Anschlußteile einerseits sehr einfach und kompakt ausgebildet werden können und andererseits eine Verbindung mit dem bzw. den ankommenden Anschlußteilen innerhalb enger Toleranzen gewährleistet.

Zur Lösung dieser Aufgabe wird bei einem Anschlußstück die Merkmalskombination nach Anspruch 1 vorgeschlagen. Ist wenigstens ein Anschlußteil mindestens eines Anschlußleiters für eine mit dem zugehörigen ankommenden Anschlußteil kreuzende Verbindung ausgebildet, so können sehr einfache, beispielsweise stabförmige, lediglich durch Drahtenden bzw. Drahtarme gebildete Anschlußteile so zur bzw. vor der Verbindung zusammengeführt werden, daß sie in Seitenansicht mit ihren Enden kreuzförmig übereinander vorstehen und beispielsweise im Kreuzungspunkt die elektrisch leitende Verbindung hergestellt werden kann. Der Kreuzungswinkel kann dabei genau rechtwinklig oder geringfügig, beispielsweise um weniger als 20° bzw. etwa 10° von der rechtwinkligen Anordnung abweichend vorgesehen sein.

In der Regel weist das Anschlußstück zwei, drei, vier oder sogar mehr Anschlußleiter und meist dann auch eine entsprechende Anzahl von Anschlußteilen auf, wobei zeckmäßig alle, einer Anschlußseite zugehörigen Anschlußteile im wesentlichen gleich ausgebildet und so in einer Reihe nebeneinander angeordnet sind, daß sie in Reihenlängsrichtung gesehen deckungsgleich liegen. Die Anschlußteile auf beiden Anschlußseiten des Anschlußstückes können jedoch zur Anpassung an die jeweiligen Erfordernisse unterschiedlich ausgebildet sein.

Zusätzlich zur beschriebenen Ausbildung, ggf.

aber auch statt dessen bei anders ausgebildeten Anschlußstücken wird gemäß der Erfindung vorgeschlagen, mindestens eine Leit- und Ausrichtfläche für wenigstens einen ankommenden Anschlußteil vorzusehen, so daß dieser beim Zusammenführen mit dem Anschlußstück von selbst in seine Verbindungsstellung geführt oder in der Verbindungsstellung durch Zentrierung gesichert wird. Die Leitfläche, die zweckmäßig durch mindestens eine Schrägfläche gebildet ist, kann zwar auch durch den Anschlußteil bzw. der Anschlußleiter gebildet sein, ist aber zweckmäßig am Isolierkörper vorgesehen, der beispielsweise aus einem keramischen Werkstoff, wie Steatit besteht und dessen Leitfläche zweckmäßig glasiert oder auf ähnliche Weise glasartig geglättet ist, so daß sehr geringe Reibungswiderstände auf den ankommenden Anschlußteil wirken.

Es ist auch denkbar, die kreuzende Verbindung nach Art einer Steckverbindung beispielsweise derart auszubilden, daß ein Anschlußteil zwei nebeneinander liegende Schenkel bzw. Flanken aufweist und der andere, kreuzende Anschlußteil zwischen diese Schenkel eingreift. Zusätzlich hierzu oder insbesondere statt dessen ergibt sich jedoch eine besonders einfache automatisierte Handhabung und eine sehr zuverlässig elektrisch leitende Verbindung, wenn die einander kreuzenden Anschlußteile für eine Schweißverbindung beispielsweise derart ausgebildet sind, daß die Verschweißung ausschließlich im Kreuzungspunkt erfolgt. An mindestens einer Anschlußseite, daß heißt an der Anschlußseite für das Anschlußglied bzw. an der Anschlußseite für die Anschlußleitung kann aber auch mindestens ein Anschlußteil des Anschlußstückes für die Verbindung mit dem ankommenden Anschlußteil ausschließlich durch Zusammenstecken ausgebildet sein, wobei die Stecköffnung zweckmäßig am Anschlußstück vorgesehen und beispielsweise durch einen Steckanschluß beispielsweise eine Federsteckklemme, eine Tulpenklemme, eine Schraubklemme oder dergleichen gebildet ist; der ankommende Anschlußteil kann dann in einfacher Weise als stiftförmiger Stecker ausgebildet, beispielsweise durch das Ende eines drahtförmigen Anschlußgliedes der Kochplatte oder dergleichen, eine Aderendhülse der Anschlußleitung oder ähnliches gebildet sein.

Der Steckanschluß kann aber auch dadurch gebildet sein, daß der Anschlußleiter ein stecker- bzw. steckstiftförmiges Steckglied, vorzugsweise eine Flachsteckzunge aufweist oder bildet. Derartige elektrisch leitende Steckverbindungen sind insbesondere für solche Elektro-Kochplatten geeignet, die niedrige Restleistungen haben bzw. mit einem Temperatur-Begrenzerschalter ausgerüstet sind, der zum Beispiel ein zwischen einem inneren Flanschrand und einem Mittelzapfen des Kochplattenkörpers liegendes Schaltergehäuse sowie einen den zugehörigen Schalter, wie einen Schnappschalter, beeinflussenden Temperaturfühler aufweist, der zweckmäßig stabförmig über das Schaltergehäuse vorsteht und an der Unterseite des beheizten Feldes des Kochplattenkörpers liegt.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung sowie auf anderen Gebieten verwirklicht sein und vorteilhafte, für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:

Fig. 1 eine über ein erfindungsgemäßes Anschlußstück angeschlossene Elektro-Kochplatte in teilweise geschnittener Kopflage,

Fig. 2 einen Ausschnitt auf die Unterseite der Kochplatte gemäß Fig. 1,

Fig. 3 das Anschlußstück in Verbindung mit Anschlußleitungen und einem Mehrfachstecker in Seitenansicht,

Fig. 4 die Anordnung gemäß Fig. 3 in Ansicht,

Fig. 5 einen Ausschnitt der Fig. 4 im Schnitt und in vergrößerter Darstellung,

Fig. 6 das Anschlußstück in Ansicht auf eine Anschlußseite,

Fig. 7 das Anschlußstück in teilweise geschnittener Ansicht,

Fig. 8 das Anschlußstück in Ansicht auf die andere Anschlußseite,

Fig. 9 einen Querschnitt durch das Anschlußstück gemäß Fig. 7,

Fig. 10 einen der Fig. 9 entsprechenden Querschnitt durch den Isolierkörper des Anschlußstückes in vergrößerter Darstellung,

Fig. 11 das Anschlußstück gemäß den Fig. 1-10 in vergrößerter, geschnittener Darstellung und im Einbauzustand,

Fig. 12 ein weiteres Anschlußstück im Längsschnitt,

Fig. 13 das Anschlußstück gemäß Fig. 12 in teilweise geschnittener Draufsicht,

Fig. 14 das Anschlußstück gemäß Fig. 12 in Ansicht von rechts,

Fig. 15 eine weitere Ausführungsform des Anschlußstückes im Längsschnitt,

Fig. 16 das Anschlußstück gemäß Fig. 15 in einer Darstellung entsprechend Fig. 13,

Fig. 17 ein weiteres Anschlußstück im Längsschnitt,

Fig. 18 das Anschlußstück gemäß Fig. 17 in einer Darstellung entsprechend Fig. 13,

Fig. 19 ein weiteres Anschlußstück mit angeschlossener Anschlußleitung im Längsschnitt,

Fig. 20 die Anordnung gemäß Fig. 19 in geschnittener Draufsicht,

Fig. 21 eine Reparaturanordnung mit einem Verbinder zum Anschluß einer ausgewechselten Elektrokockplatte an ein bereits verschweißtes Anschlußstück,

Fig. 22 einen Querschnitt durch eine Anschlußseite einer weiteren Ausführungsform eines Anschlußstückes,

Fig. 23 das Anschlußstück gemäß Fig. 21 in Ansicht von rechts,

Fig. 24 eine weitere Ausführungsform eines Anschlußstückes in Verbindung mit einer Elektrokochplatte im Querschnitt,

Fig. 25 eine weitere Ausführungsform eines Anschlußstückes in einer Darstellung ähnlich Fig. 22,

Fig. 26 eine weitere Ausführungsform eines Anschlußstückes in einer Darstellung entsprechend Fig. 25,

Fig. 27 der Isolierkörper eines weiteren Anschlußstückes im Längsschnitt,

Fig. 28 der Isolierkörper gemäß Fig. 27 in Ansicht von links,

Fig. 29 der Isolierkörper gemäß Fig. 27 in teilweise geschnittener Ansicht auf die Unterseite,

Fig. 30 bis 35 aufeinanderfolgende Phasen der Montage und des elektrischen Anschlusses einer Elektrokochplatte in einer Herdmulde.

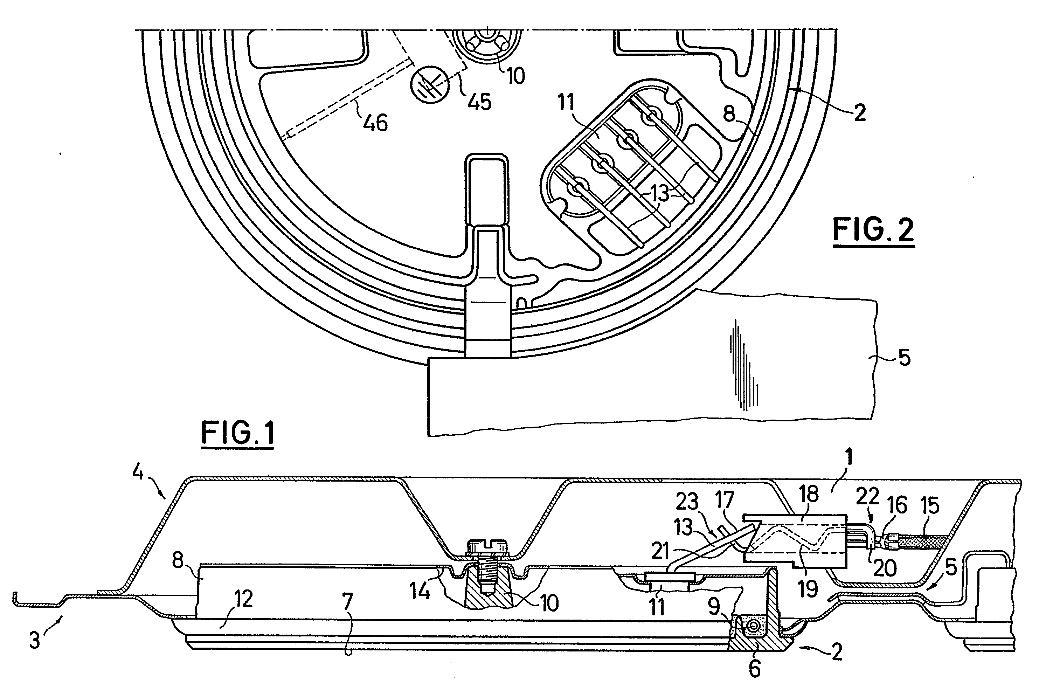

Wie die Fig. 1 und 2 zeigen dient ein erfindungsgemäßes Anschlußstück 1 zum Anschluß einer elektrischen Baueinheit in Form insbesondere einer Elektrokochplatte 2, die einzeln oder zu mehreren in Öffnungen einer profilierten Muldenplatte 3 aus Blech zu einer vormontierten Baugruppe zu befestigen ist, wobei zur Spannung der Kochplatte 2 gegen die Oberseite der Muldenplatte 3 ein an deren Unterseite liegender Spannteil 4 und zur Versteifung der Muldenplatte 3 so wie zur Verdrehsicherung einer oder mehrerer Kochplatten 2 ein Zwischenteil 5 zwischen der Herdmulde 3 und dem Spannteil 4 vorgesehen ist. Die Kochplatte 2 weist einen beispielsweise aus einem Gußwerkstoff bestehenden Kochplattenkörper 6 auf, dessen obere ebene Fläche eine runde, mehreckige oder ähnlich ringförmig geschlossene Kochfläche 7 bildet und der an seiner Unterseite mit einem gegenüber seinem Außenumfang geringfügig zurückversetzten, nach unten vorstehenden äußeren Flanschrand 8 versehen ist. Innerhalb dieses äußeren Flanschrandes 8 und ggf. zwischen diesem und einem entsprechenden inneren Flanschrand sind innerhalb einer eine Mittelzone freilassenden Ringzone in Spiralnuten an der Unterseite des Kochplattenkörpers 6 Heizwiderstände 9, beispielsweise drei für eine 7-Takt-Schaltung geeignete Heizwiderstände in Form von Drahtwendeln in eine verpreßte Isoliermasse eingebettet.

Im Zentrum weist der Kochplattenkörper 6 einen von seiner Unterseite nach unten etwa gleich weit wie der Flanschrand 8 vorstehenden Mittelzapfen 10 auf, in welchen ein Spannglied, beispielsweise eine Schraube eingreift, mit welchem der Spannteil 4 gegen die Unterseite des Kochplattenkörpers 6 so festgelegt ist, daß er sich benachbart zur Elektrokochplatte 2, ggf. unter Zwischenlage des Zwischenteiles 5, verspannt an der Unterseite der Herdmulde 3 abstützt. Der Spannteil 4 kann ein Bügel , ein deckelförmiger oder profiliert plattenförmiger Teil und für jede Elektrokochplatte 2 gesondert oder für zwei oder mehr bzw. alle Elektrokochplatten 2 der Herdmulde 3 gemeinsam vorgesehen sein.

Zur Abstützung an der Oberseite der Herdmulde 3 weist die Elektrokochplatte 2 am Außenumfang des äußeren Flanschrandes 8 einen durch ein Blechprofil gebildeten Tragring 12 auf, der nach Art einer Blende die Montageöffnung in der Herdmulde 3 überdeckt. Die Unterseite des Kochplattenkörpers 6 ist im wesentlichen durch einen aus Blech bestehenden Abschlußdeckel 14 verschlossen, der an der Stirnseite des Flanschrandes 8 und/oder des Mittelzapfens 10 abgestützt und mit demselben Spannglied wie der Spannteil 4 gegenüber dem Kochplattenkörper 6 festgelegt sein kann. Der Abschlußdeckel wird von einer an ihm befestigten Isoliermuffe 11 aus Steatit oder dergleichen durchsetzt, die in Ansicht gemäß Fig. 2 langrund ausgebildet sein kann und zur nebeneinanderliegenden gesonderten Durchführung von relativ biege- bzw. eigen steifen elektrischen Leiterstücken aus Draht oder dergleichen dient, die an der Innen- und der Außenseite der Isoliermuffe 11 abgewinkelt sowie innerhalb des Kochplattenkörpers beispielsweise über aus der Isoliermasse vorstehende Endstifte an den Heizwiderständen 9 angeschlossen sind.

Außerhalb des Kochplattenkörpers 6 bzw. an der Unterseite der Elektrokochplatte 2 weisen diese Leiterstücke jeweils ein Anschlußglied 13 auf, wobei die Anschlußglieder 13 nebeneinanderliegend für den elektrischen Anschluß der Elektrokochplatte 2 mit Hilfe des Anschlußstückes 1 vorgesehen sind. Die Elektrokochplatte 2 kann insgesamt bzw. hinsichtlich ihrer elektrischen Anschlüsse ähnlich wie in der DE-OS 35 40 815 bzw. wie in der DE-OS 35 40 816 ausgebildet sein, auf welche auch insoweit wegen weiterer Einzelheiten und Wirkungen Bezug genommen wird, als das Anschlußstück 1 an mindestens einer Anschlußseite wenigstens eines der dort beschriebenen Anschlußteile aufweisen kann. Ferner erfolgt die Montage ähnlich wie in diesen Druckschriften beschrieben nach einem Verfahren, bei welchem die Elektrokochplatten in Kopflage montiert und elektrisch angeschlossen werden.

Für den elektrischen Anschluß der Anschlußglieder 13 sind flexible oder bevorzugt biegbare, jedoch im jeweils gebogenen Zustand eigensteife Anschlußleitungen 15 vorgesehen, die mit einer beispielsweise geflochtenen Isolierung ummantelt sein können und an ihren Enden jeweils einen einem Anschlußglied 13 zugehörigen ankommenden Anschlußteil 16 in Form beispielsweise einer Aderendhülse aufweisen. Auch das jeweilige Anschlußglied 13 bildet in Bezug auf das Anschlußstück 1 einen ankommenden Anschlußteil 17.

Das Anschlußstück 1 weist einen in Draufsicht im wesentlichen länglich rechteckigen, zur Kochfläche 7 parallel flachen Isolierkörper 18 mit einer der Anzahl der Anschlußteile 17 entsprechenden Anzahl gleicher, nebeneinanderliegender Anschlußleiter 19 auf, die den Isolierkörper 18 zwischen zwei langen Schmalseiten parallel zueinander durchsetzen und an diesen beiden Schmalseiten jeweils vorstehende Anschlußteile 20, 21 für die ankommenden Anschlußteile 16, 17 derart bilden, daß jeweils zwei Anschlußteile 16, 20 und 17, 21 in einer Verbindungsstelle 22 bzw. 23 elektrisch leitend miteinander verbunden werden können.

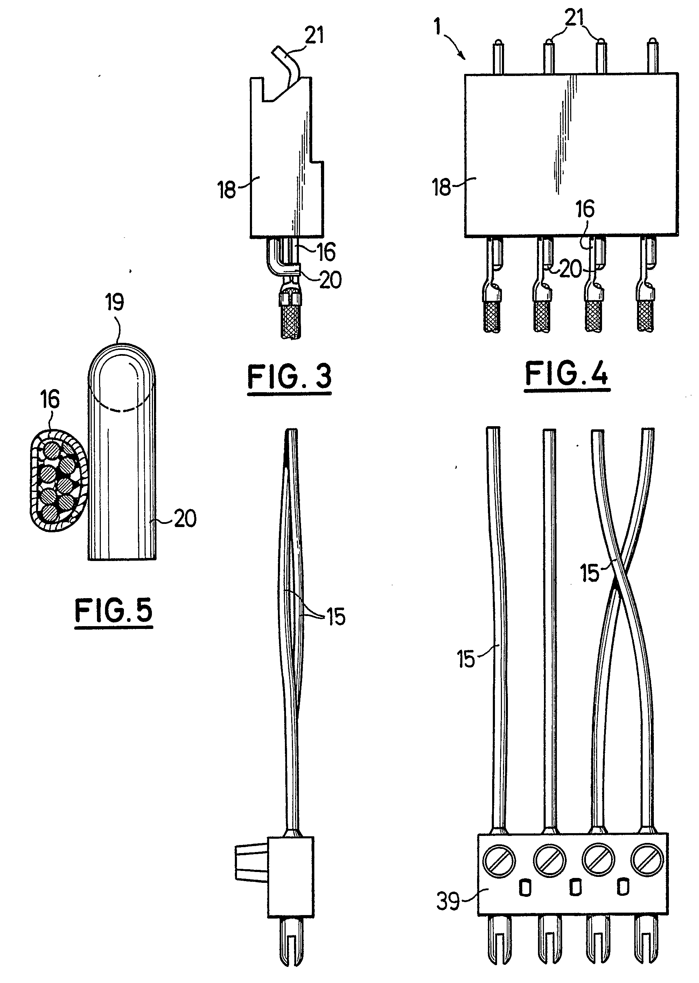

Wie insbesondere die Fig. 4 bis 11 zeigen, weist der Isolierkörper 18 eine der Anzahl der Anschlußleiter 19 entsprechende Anzahl von im Querschnitt flach rechteckigen, über ihren gesamten Umfang begrenzten, gleichen und nebeneinanderliegenden Durchgangsöffnungen 24 auf, deren größere Querschnittserstreckung rechtwinklig zur Flacherstreckung liegt und die den Isolierkörper 18 zwischen den beiden, den Anschlußseiten zugehörigen Schmalseiten bzw. Endflächen 25, 26 rechtwinklig, d. h. parallel zur Flacherstreckung mit im wesentlich konstanter Weite durchsetzen. Jeder Anschlußleiter 19 besteht aus einem Strang, der ggf. aus Blech oder dergleichen gebildet sein kann, zweckmäßig jedoch durch einen Rundstahldraht gebildet ist und dessen Mittelachse über seine Länge durchgehend ebenso wie die Anschlußteile 20, 21 derart in einer einzigen Längsmittelebene 27 liegt, daß diese Längsmittelebene mit der entsprechenden Längsmittelebene der Durchgangsöffnung 24 zusammenfällt.

In dieser Längsmittelebene ist der, über seine Länge konstante Querschnitte aufweisende Anschlußleiter 19 zwischen den Endflächen 25, 26 derart gekrümmt bzw. dreifach entgegengesetzt annähernd rechwinklig bzw. stumpfwinklig abgewinkelt, daß er zwischen den Endflächen 25, 26 mit zwei Krümmungsbögen an den beiden gegenüberliegenden inneren Schmalseiten der Durchgangsöffnung 24 und unmittelbar im Anschluß an die Endflächen 25, 26 nochmals mit zwei zu seiner Haupt-Längsrichtung bzw. zur Längsrichtung der Durchgangsöffnung 24 in etwa parallelen Abschnitten an den gegen überliegenden inneren Schmalseiten der Durchgangsöffnung abgestützt sein kann. Da die Breite bzw. Querschnittsdicke des Anschlußleiters 19 nahezu so groß wie die lichte Breite der Durchgangsöffnung 24 ist, ergibt sich auf eine einfache Weise eine Verdrehsicherung des Anschlußleiters 19 gegenüber dem Anschlußkörper 18, wobei der Anschlußleiter 19 entweder mit geringem Bewegungsspiel in die Durchgangsöffnung 24 eingreifen kann oder mit einer gewissen Vorspannung federnd an den inneren Schmalflächen abgestützt ist.

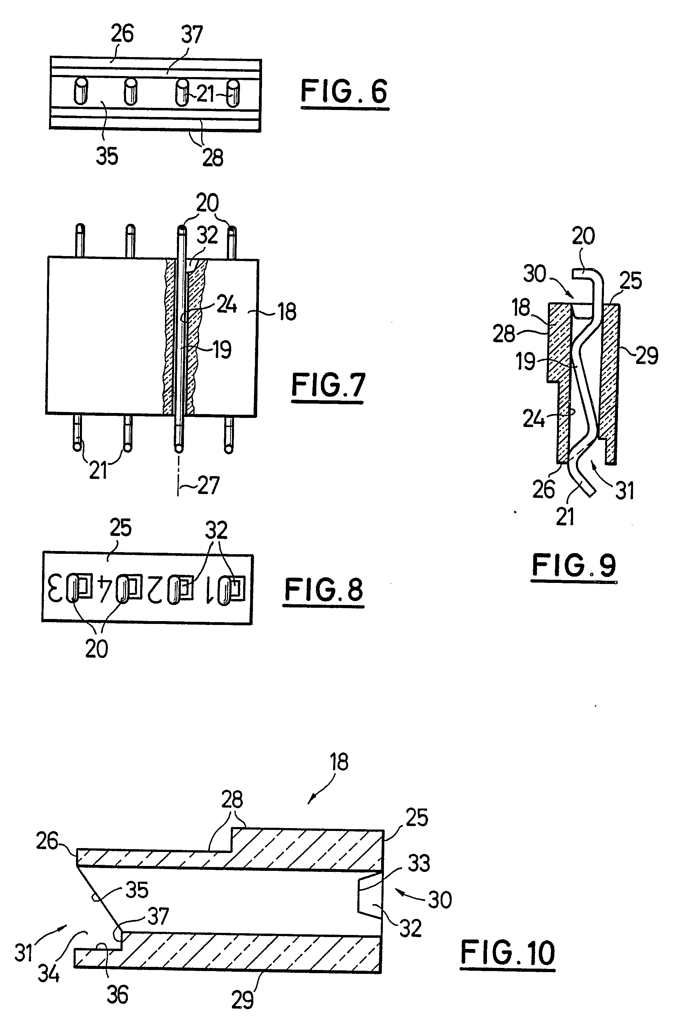

Mindestens ein Anschlußteil 20, 21 könnte zwar durch einen gesonderten, elektrisch leitend mit dem Anschlußleiter 19 verbundenen Bauteil gebildet sein, jedoch sind die Anschlußteile 20, 21 zweckmäßig einteilig mit dem Anschlußleiter 19 als entgegengesetzte Abwinklungen ausgebildet, wobei der Anschlußteil 20 in Richtung zur Ebene der Kochfläche 7 bzw. zur Oberseite des Anschlußstückes 1 und der Anschlußteil 21 von der Unterseite der Elektrokochplatte 2 weg bzw. zur Unterseite des Anschlußstückes 1 hin abgewinkelt ist, derart daß die Anschlußteile 20, 21 unmittelbar in diejenigen Abschnitte übergehen, die unmittelbar im Anschluß an die Endflächen 25, 26 an den beiden gegenüberliegenden inneren Schmalflächen der Durchgangsöffnung 24 abgestützt sind. Mindestens ein Anschlußteil 20, 21, insbesondere die Anschlußteile 20 können aber auch in einer anderen als der dargestellten Ausrichtung quer, vorzugsweise rechtwinklig zur Hauptlängserstreckung des Anschlußleiters 19 liegen. Obwohl auch in Ansicht gemäß Fig. 8 schräge Lagen dieser Anschlußteile denkbar sind, ist es besonders zweckmäßig, wenn sie in Draufsicht gemäß Fig. 4, beispielsweise nach links, rechtwinklig zur Längsmittelebene 27 abgewinkelt sind, vorzugsweise achsgleich fluchtend zueinander bzw. etwa in gleicher Richtung frei ausragend. Die Anschlußteile können im wesentlichen parallel zur Kochfläche liegen. Auch beide Anschlußteile 20, 21 können jeweils in dieser Weise quer liegen, wobei dann zweckmäßig die Längsmittelebenen der Anschlußleiter entsprechend quer liegen, beispielsweise derart, daß alle Anschlußleiter in einer gemeinsamen Längsmittelebene vorgesehen sind. Ferner können nur die Anschlußteile 21, insbesondere rechtwinklig, quer liegen.

Der Anschlußteil 20 liegt mit einem gegenüber seiner Querschnittsweite insbesondere mehrfach größeren Abstand von der zugehörigen Endfläche 25 und parallel zu dieser bzw. rechtwinklig zur Haupt-Längserstreckung des Anschlußleiters 19, während der Anschlußteil mit der zugehörigen Endfläche 26 bzw. mit der genannten Haupt-Längserstreckung einen Winkel in der Größenordnung von etwa 45° einschließt und im wesentlichen von einer unmittelbar bei dieser Endfläche 26 liegenden Abwinklung geradlinig ausgeht. Der Anschlußteil 20 dagegen geht von einem Abschnitt des Anschlußleiters 19 aus, welcher parallel zur genannten Haupt-Längsrichtung bis in die Durchgangsöffnung 24 ragt und in der beschriebenen Weise in dieser abgestützt ist.

Jeder der Anschlußteile 20, 21 ist gegenüber den beiden im wesentlichen parallelen Flachseiten 28, 29 derart zurückversetzt, daß er im wesentlichen nicht über die einander gegenüberliegenden Ebenen der beiden inneren Schmalseiten der Durchgangsöffnung 24 vorsteht, so daß der Anschlußleiter 19 vor dem Einsetzen in den Isolierkörper 18 vollständig fertig gebogen werden kann. Im dargestellten Ausführungsbeispiel ist jeder der Anschlußteile 20, 21 durch einen geradlinig, stiftförmig bis zu seinem Ende frei ausragenden Arm gebildet, es ist jedoch auch denkbar, ihn als Quersteg eines Bügels oder ähnlich beispielsweise derart auszubilden, daß der freie Bügelschenkel zurück in die Durchgangsöffnung 24 geführt ist. Die obere Flachseite 28 des Isolierkörpers 18 ist an dessen die Elektrokochplatte 2 untergreifenden, der Endfläche 26 zugehörigen Ende für die Anlage an der Unterseite des Abschlußdeckels 14 abgesetzt, so daß das Anschlußstück 1 möglichst wenig über die Unterseite der Elektrokochplatte 2 vorsteht und eine Anschlagschulter 43 für die Anlage am Außenumfang des Flanschrandes oder dergleichen gebildet sein kann.

Der Isolierkörper 18 weist im Bereich des jeweiligen Anschlußteiles 20, 21 eine Leit- und Ausrichtfläche 30 bzw. 31 zur gegenseitigen Ausrichtung des Anschlußstückes 1 mit dem jeweiligen ankommenden Anschlußteil 16 bzw. 17 auf, wobei gleichzeitig die abgesetzte Fläche der oberen Flachseite 28 beim Zusammenführen des Anschlußstückes 1 mit der Elektrokochplatte 2 zur gleitenden Verschiebung entlang der Unterseite der Elektrokochplatte 2 bestimmt sein kann.

Die Leit- und Ausrichtflächen 30 für die Anschlußteile 16 der Anschlußleitungen 15 sind durch gesonderte Zentrierausnehmungen 32 gebildet, von denen jeweils eine nur einem ankommenden Anschlußteil 16 zugeordnet ist und die in der Endfläche 25 unmittelbar seitlich benachbart zu den Durchgangsöffnungen 24 derart vorgesehen sind, daß sie jeweils an einer Seite zur zugehörigen Durchgangsöffnung offen, also als Vertiefungen in den zugehörigen Seitenfläche der Durchgangsöffnungen 24 ausgebildet sind. Alle Zentrierausnehmungen 32 liegen auf der jeweils entsprechend gleichen Seite der zugehörigen Durchgangsöffnung 24 und sind so in Richtung zu derjenigen inneren Schmalseite der Durchgangsöffnung 24 versetzt, daß sie an diese Schmalseite anschließen und nicht über die gesamte Querschnittshöhe der Durchgangsöffnung 24 reichen. An ihren drei im Winkel zueinanderliegenden inneren Umfangsbegrenzungen sind die in Ansicht rechteckigen Zentrierausnehmungen 32 zu ihren Bodenflächen trichterförmig verengt, wobei die Bodenflächen Anschlagflächen 33 für die Endflächen der ankommenden Anschlußteile 16 bilden.

Die Leit- und Ausrichtflächen 31 an der Endfläche 26 sind durch eine für alle Anschlußteile 21 gemeinsame Nut 34 gebildet, die über die Länge dieser Endfläche durchgehend vor gesehen und tiefer als die Zentrierausnehmung 32 ist. Die zur oberen Flachseite 28 hin liegende Seitenfläche der Nut ist unter einem relativ steilen Winkel von mehr als 45° gegenüber der Haupt-Längsrichtung der Anschlußleiter 19 geneigt, während die andere Seitenfläche parallel zu dieser Haupt-Längsrichtung liegt und die Bodenfläche 37 rechtwinklig dazu vorgesehen ist. Die geneigte Seitenfläche bildet eine Einzel-Leitfläche 35, die ebenso wie die Bodenfläche 37 den zugehörigen Abschnitt der Endfläche 26 bildet, sich jedoch nur zwischen den inneren Schmalflächen der Durchgangsöffnung 24 erstreckt, derart, daß die mit der Einzel-Leitfläche 35 nach innen im spitzen Winkel konvergierende Einzel-Leitfläche 36 gegenüber der zugehörigen inneren Schmalseite der Durchgangsöffnung 24 zur unteren Flachseite 29 hin versetzt ist. Dadurch ist ein an der Endfläche 26 vorstehender, von der Leitfläche 36 und der Flachseite 29 begrenzter Steg vorgesehen, der als Anschlagsteg für die ankommenden Anschlußteile 17 dienen kann.

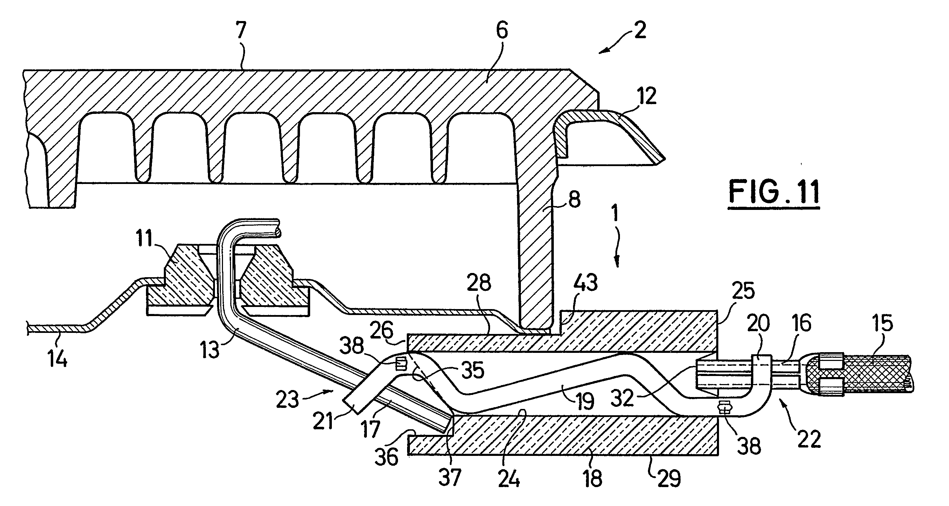

Beim automatischen Zusammenführen des Anschlußstückes 1 mit den schräg von der Unterseite der Elektrokochplatte 2 abstehenden Anschlußdrähten 13 laufen die Enden von deren Anschlußteilen 17 auf die geneigte Einzel-Leitfläche 35 beispielsweise im Abstand von der Bodenfläche 37 auf, so daß beim weiteren Zusammenführen entweder das Anschlußstück 1 in Richtung gegen die Unterseite der Elektrokochplatte 2 geführt wird oder die Anschlußdrähte 13 mit Hilfe des Anschlußstückes 1 so weit noch von der Unterseite der Elektrokochplatte weggebogen werden, bis sie an der Bodenfläche 37 bzw. ggf. an der Einzel-Leitfläche 36 anschlagen. In dieser Lage liegen dann sämtliche Anschlußteile 17 auf der entsprechenden gleichen Seite des jeweils zugehörigen Anschlußteiles 21, wobei die Anschlußteile 17, 21 in Seitenansicht gemäß Fig. 11 quer zueinanderliegend einander paarweise nahe benachbart zur Isoliermuffe 11 kreuzen. Die Abstände zwischen benachbarten Anschlußteilen 21 sind größer als deren Durchmesser bzw. Dicke, so daß die Anschlußteile 17 zunächst berührungsfrei zwischen den Anschlußteilen 21 eingeführt werden können, wonach das Anschlußstück 1 seitlich verschoben wird, bis alle Anschlußteile 17, 21 paarweise punktförmig aneinanderliegen. Danach können die Paare von Anschlußteilen 17, 21 mit einer Feinpunkt-Schweißzange gleichzeitig oder nacheinander starr und tragend miteinander verbunden werden. Durch die beschriebene Ausbildung ergibt sich eine so große Festigkeit, daß das Anschlußstück 1 ausschließlich von den Anschlußdrähten 13 an der Unterseite der Elektrokochplatte 2 getragen wird und keine weitere Befestigung erforderlich ist.

Die Anschlußteile 16 der Anschlußleitung 15 können zwar nach dem Anbringen den Anschlußstückes 1 an der Elektrokochplatte 2 angeschlossen werden, jedoch wird zweckmäßig so vorgegangen, daß zunächst das Anschlußstück 1 mit den Anschlußteilen 16 verbunden und dann erst an die Anschlußteil 17 angeschlossen wird. Die automatisierte Verbindung der Anschlußteile 16 erfolgt dadurch, daß sämtliche Anschlußteile 16 gemeinsam oder unmittelbar aufeinanderfolgend gegen die Endfläche 25 des Isolierkörpers 18 zwischen den Anschlußteilen 20 bewegt werden, daß dann das Anschlußstück 16 gegenüber den entsprechen ausgerichteten Anschlußteilen 16 bis zu deren Anschlag an den Anschlußteilen 20 quer bewegt wird, wonach die Anschlußteile 16 wenigstens angenähert mit den Zentrierausnehmungen 32 fluchten und, soweit erforderlich, unter weiter genauerer Ausrichtung an den Seitenflächen der Zentrierausnehmungen 32 bis zum Anschlag an den Anschlagflächen 33 in diese eingefahren werden. Wie Fig. 5 zeigt, sind die Anschlußteile 16 nach Art von Aderendhülsen jeweils durch einen um die Litzen der zugehörigen Anschlußleitung 15 gebogenen Blechmantel mit einer Längsnaht-Lücke gebildet, mit deren Bereich sie zweckmäßig an die Anschlußteile 20 angelegt werden. Die Anschlußteile 20 stehen in Seitenansicht mit ihren Enden nicht oder nur um ein gegen über ihrem Durchmesser geringeres Maß über die Anschlußteile 16 vor, während die Anschlußteile 21 demgegenüber weiter über die Anschlußteile 17 vorstehen.

Zur Sicherung der Anschlußleiter 19 bzw. Anschlußteile 20, 21 gegen Verschieben in Längsrichtung der Durchgangsöffnungen 24 sind Anschläge 38 vorgesehen, die vorzugsweise einteilig mit dem Anschlußleiter 19 ausgebildet und durch beiderseits seitlich herausgequetschte Nocken gebildet sind, denen als Gegen-Anschlagflächen die Endflächen 25, 26 zugeordnet sind. Wie die Fig. 3 und 4 zeigen, können die vom Anschlußstück 1 abgekehrten Enden der Anschlußleitungen 15 an einen gemeinsamen Mehrfachstecker 39 angeschlossen sein, über welchen die Elektrokochplatte 2 in einfacher Weise an einen von Hand zu betätigenden Schalter für die Einstellung der unterschiedlichen Leistungsstufen anlgeschlossen werden kann. Die Anschlußleiter 19 bzw. die Anschlußteile 20, 21 bestehen zweckmäßig ebenso wie die Anschlußteile 17 aus sogenanntem, zur Punkschweißung geeignetem Punktierdraht, während die Anschlußteile 16 zweckmäßig aus rostfreiem Stahl oder aus vernickeltem Stahl bestehen. Das Anschlußstück 1 kann auch für einen zwei- oder dreipoligen Anschluß ausgebildet bzw. verwendet werden. Der Isolierkörper 18 besteht zweckmäßig aus einem keramischen Werkstoff, beispielsweise Steatit. Statt in einer Lage gemäß Fig. 11 lassen sich die Anschlußteile 21, insbesondere bei quer liegender Ausrichtung, auch in einer Lage verbinden, in welcher die Anschlußteile 17 zunächst steiler nach unten gelegen sind, wonach nach der Befestigung das Anschlußstück 1 nach oben in die Lage gemäß Fig. 11 überführt wird.

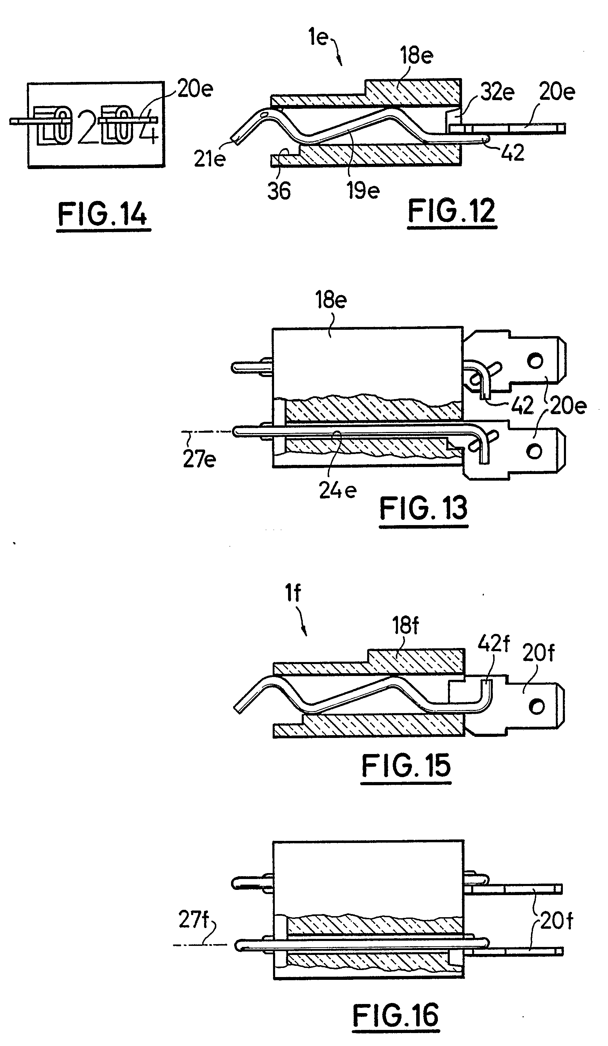

In den Fig. 12 bis 26 sind für einander entsprechende Teile die gleichen Bezugszeichen wie in den übrigen Figuren, jedoch mit unterschiedlichen Buchstabenindizes verwendet, weshalb die zugehörigen Beschreibungsteile jeweils entsprechend sinngemäß gelten.

Bei der Ausführungsform nach den Fig. 12 bis 14 liegen die beiden Enden des Anschlußleiters 19e quer, insbesondere im rechten Winkel zueinander, wobei das dem Anschlußteil 20e zugehörige Ende 42 im rechten Winkel zur Längsmittelebene 27e vorgesehen ist. Des weiteren ist dieses Ende 42 nicht unmittelbar als Anschlußteil vorgesehen, sondern an ihm ein gesondertes Steckglied 20e in Form einer Flachsteckzunge befestigt, die im wesentlichen durch einen durchgehend ebenen, plattenförmigen Teil gebildet ist. Dieser Teil weist einen gegenüber der eigentlichen Flachsteckzunge geringfügig verbreiterten, im wesentlichen außerhalb des Isolierkörpers 18e liegenden Schaftansatz auf, an dessen einer Oberfläche das jeweils zugehörige Ende 42 bzw. der zugehörige abgewinkelte Endteil des Anschlußleiters 19e flach anliegt, wobei der Schaft 3 eine rippenartige, das Ende 42 kreuzende Ausprägung ausweisen kann, welche eine besonders gute Schweißverbindung mit dem Ende 42 gewährleistet. Das Steckglied 20e weist außerdem einen vom Schaftteil ausgehenden, in der Breite wesentlich reduzierten Vorsprung für den Eingriff in die Ausnehmung 32e auf, die in diesem Fall nicht unbedingt als Zentrierausnehmung, sondern vor allem zur formschlüssigen Lagesicherung und zusätzlichen Abstützung des Steckgliedes 20e gegen Bewegungen quer zur Längsmittelebene 27e vorgesehen ist. Die beiden bzw. alle Steckglieder 20e liegen in einer gemeinsamen Ebene, während die Enden 42 koaxial miteinander fluchten. Jedes Steckglied 20e bildet auch gleichzeitig einen Längsanschlag für den zugehörigen Anschlußleiter 19e derart, daß dieser gegen Bewegungen im Sinne eines Hineinschiebens des Steckgliedes 20e in den Isolierkörper 18e gesichert ist.

Im Falle der Ausbildung nach den Fig. 15 und 16 liegen mindestens zwei bzw. alle Steckglieder 20f in zueinander sowie zu den Längsmittelebenen 27f parallelen Ebenen nebeneinan der, wobei die Enden 42f ebenfalls parallel zueinander bzw. in der jeweils zugehörigen Längsmittelebene 27f vorgesehen sind.

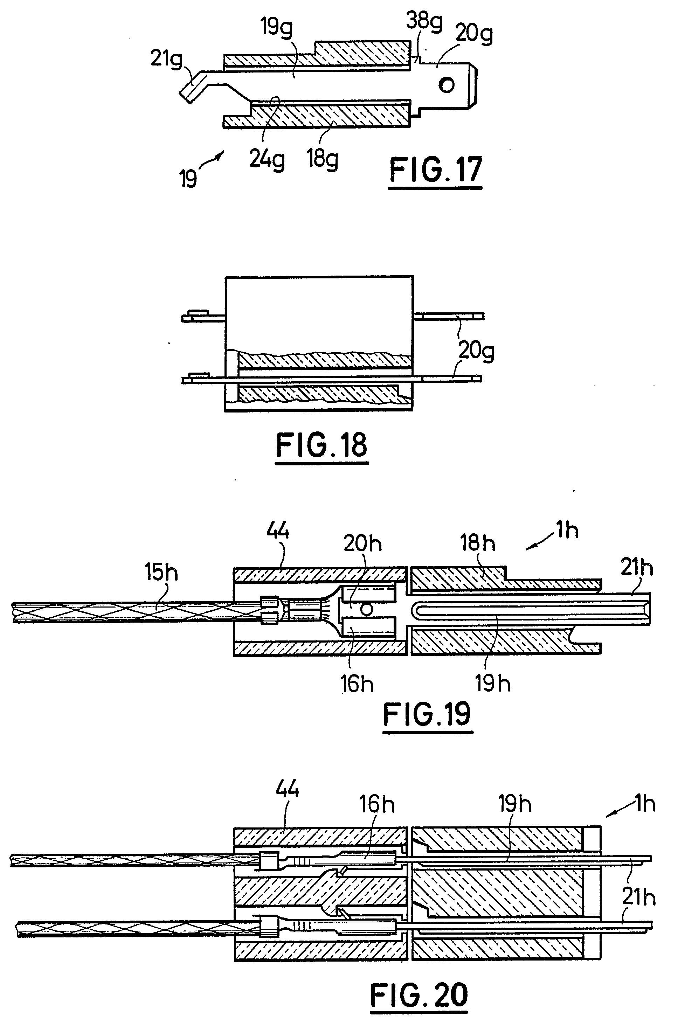

Wie die Fig. 17 und 18 zeigen, kann das Steckglied 20g auch einteilig mit dem Anschlußleiter 19g ausgebildet sein, der in diesem Fall zweckmäßig im wesentlichen aus einem streifenförmigen geradlinigen Blechstreifen besteht, dessen Breite an die Durchgangsöffnung 24g angepaßt ist. Am Fuß bildet das Steckglied 20g zwei T-förmig seitlich vorstehende Anschläge 38g als Längsanschlag für die Anlage an der zugehörigen Endfläche des Isolierkörpers 18g. Der ebenfalls streifenförmige, jedoch gegenüber dem Zentralabschnitt des Anschlußleiters 19g schmalere und annähernd in dessen Ebene liegende Anschlußteil 21g ist im wesentlichen durch eine Ausnehmung an einer der beiden Längskanten des Anschlußleiters 19g gebildet, wobei diese Ausnehmung divergierende Seitenflanken aufweist und der Anschlußteil 21g schräg zur Längsrichtung des Anschlußleiters 19g liegt. Der Anschlußteil 20 kann an einer Seitenfläche eine vorstehende Ausprägung für eine bessere Schweißverbindung mit dem frei ausragend ankommenden Anschlußteil der Elektrokchplatte aufweisen.

Wie die Fig. 19 und 20 zeigen, kann der Anschlußteil 21h auch durch eine geradlinige Fortsetzung des übrigen, streifenförmigen Anschlußleiters 19h gebildet sein, der zweckmäßig eine über eine Flachseite bis zum Ende des Anschlußteiles 21h vorstehende Längsrippe als Versteifung aufweist. Des weiteren ist gemäß den Fig. 19 und 20 ein gehäuseförmiges Isolierstück 44 vorgesehen, das mindestens einen ankommenden Anschlußteil 16h bzw. alle derartige Anschlußteile 16h der Anschlußleitungen 15h einer Kochplatte im wesentlichen vollständig umschlossen in gesonderten Öffnungen aufnimmt, so daß praktisch diese Anschlußteile 16h zu einem Gesamtstecker zusammengefaßt sein können. Die ankommenden Anschlußteile 16h sind in diesem Fall Flachstecker-Hülsen für die Aufnahme der als Flachstecker ausgebildeten Steckglieder 20h und durch aus ihnen herausgeformte Rastzungen im Isolierstück 44 gegen den Einsteckdruck lagegesichert. Obwohl die Steckglieder 20h ebenenparallel bzw. in gleichen Ebenen wie die Anschlußteile 21h liegen, ist durch entsprechend verschränkte Ausbildung des Anschlußleiters 19h auch eine der beschriebenen winkligen Lagen denkbar, wobei die Verschränkung gleichzeitig zur Längsarretierung gegenüber dem Isolierkörper 18h dienen kann. Die Außenform des Isolierstückes 44 bildet im angeschlossenen Zustand praktisch eine kontinuierliche Fortsetzung der Außenform des Isolierkörpers 18h und dadurch mit diesem ein durchgehendes Gehäuse, dessen Teile nur durch den Eingriff der elektrischen Steck- und Gegensteckglieder gegeneinander sowie dadurch arretiert sein können, daß beispielsweise die seitlichen Anschläge der Steckglieder 20h in das Isolierstück 44 eingreifen. Die Ausbildungen nach den Fig. 12 bis 20 sind insbesondere für solche Kochplatten geeignet, die gemäß Fig. 2 einen bei 45 angedeuteten Temperaturbegrenzer mit einem beispielsweise stabförmigen Temperaturfühler 46 für die Überwachung einer maximal zulässigen Temperatur des Kochplattenkörpers aufweisen.

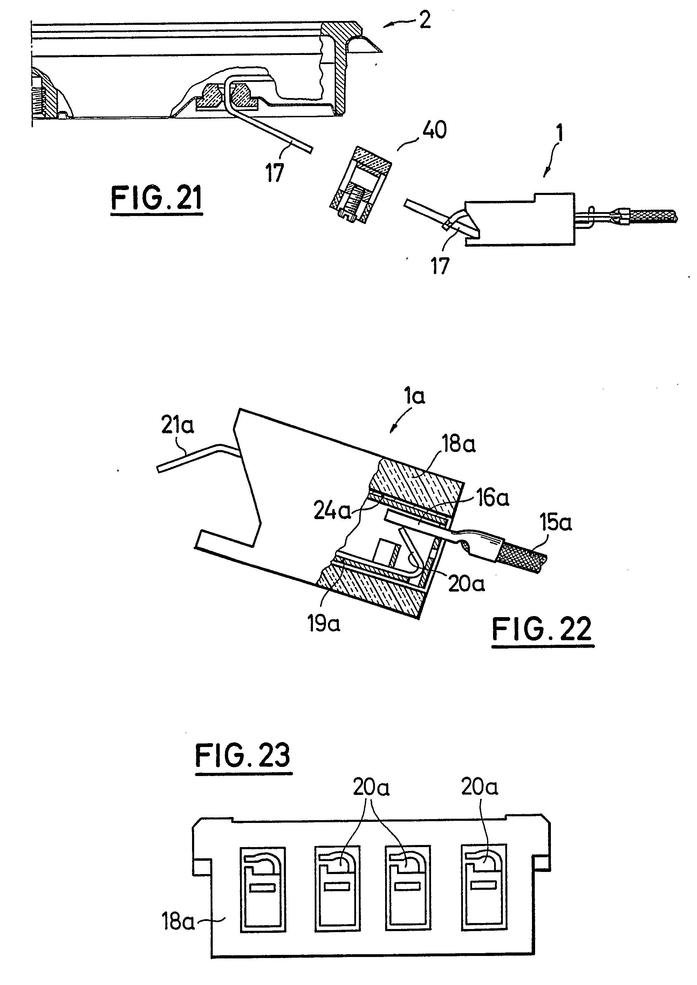

Die in der beschriebenen Weise montierte und elektrisch angeschlossene Elektrokochplatte läßt sich im Reparaturfall gegen eine andere Elektrokochplatte beispielsweise dann unter Verwendung desselben Anschlußstückes 1 auswechseln, wenn gemäß Fig. 21 ein nach Art einer Lüsterklemme ausgebildeter Verbinder 40 verwendet wird, der für jeden Anschlußpol eine Verbindungsbuchse aufweist. Die auszuwechselnde Elektrokochplatte 2 wird dabei dadurch vom Anschlußstück 1 getrennt, daß ihre Anschlußdrähte ohne Zerstörung von deren Verbindung mit den Anschlußteilen 21 nahe bei der Isoliermuffe 11 durchgeschnitten werden, so daß die Anschlußteile 17 an dem Anschlußstück 1 verbleiben und über dieses bzw. die Anschlußteile 21 relativ weit vorstehende geradlinige An schlußstifte bilden. Diese Anschlußstifte werden paarweise gemeinsam mit den zugehörigen Anschlußteilen 17 der neuen Elektrokochplatte 2 von entgegengesetzten Seiten in jeweils eine Buchse des Verbinders 40 eingeführt und dann beispielsweise durch eine Klemmschraube festgelegt.

Gemäß Fig. 22 können die Anschlußteile 20a an einer Anschlußseite des Anschlußstückes 1a, beispielsweise für die Anschlußteile 16a der Anschlußleitungen 15a durch Steckerteile, insbesondere Steckbuchsen gebildet sein, welche die ankommenden Anschlußteile 16a entweder unlösbar verkrallt oder wiederausssteckbar aufnehmen. Der Anschlußleiter 19a besteht in diesem Fall aus Blech, was dann zweckmäßig auch für die Anschlußteile 21a gilt. Im übrigen sind in den Fig. 22 bis 26 für alle entsprechenden Teile die gleichen Bezugszeichen wie in den übrigen Figuren, jedoch mit unterschiedlichen Buchstabenindizes verwendet.

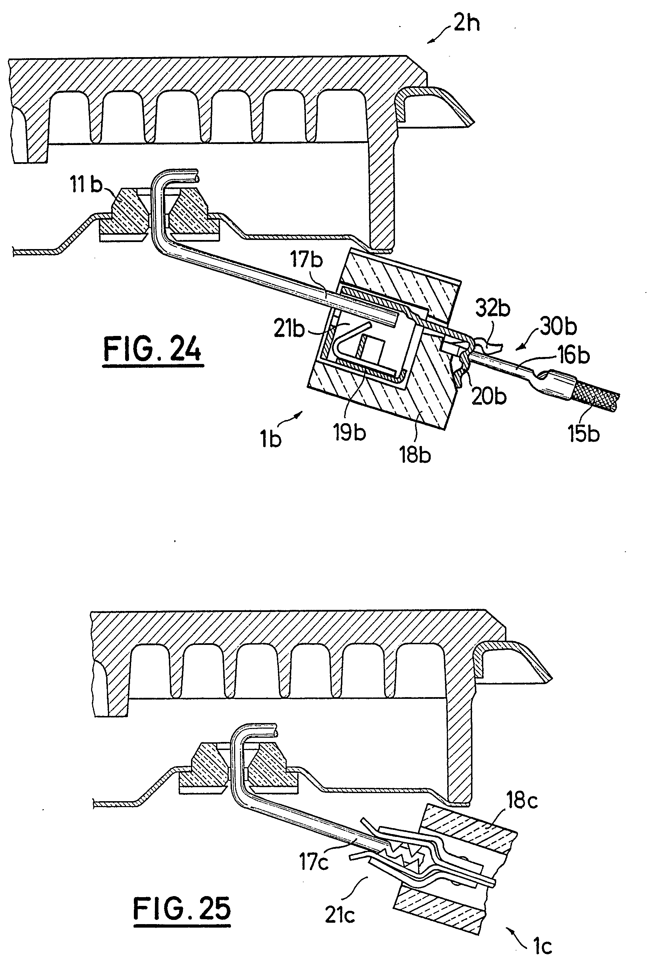

Bei der Ausführungsform nach Fig. 24 sind die Anschlußteile 21b des Anschlußstückes 1b durch insbesondere buchsenartige Steckerteile gebildet, in welche die Anschlußteile 17b der Elektrokochplatte 2b unlösbar verkrallt oder wieder aussteckbar eingesteckt werden können. Wie Fig. 24 ferner zeigt, kann wenigstens eine Einzel-Ausrichtfläche der Leit-und Ausrichtflächen 30b des Anschlußstückes auch durch den zugehörigen Anschlußleiter 19b bzw. den zugehörigen Anschlußteil 20b gebildet sein, der zeckmäßig eine entsprechend geformte, vorstehende Lasche aufweist. Im Falle der Ausbildung der Anschlußteile des Anschlußstückes als Steckerbuchsen können diese vollständig innerhalb des Isolierkörpers 18b bzw. 18b liegen.

Gemäß Fig. 25 ist als Stecker-Anschlußteil 21c eine über den Isolierkörper 18c mit einem Teil Ihrer Länge vorstehende Tulpenklemme vorgesehen, die den ankommenden Anschlußteil 17c von zwei einander gegenüberliegenden Seiten her maul-und krallenartig federnd umgreift.

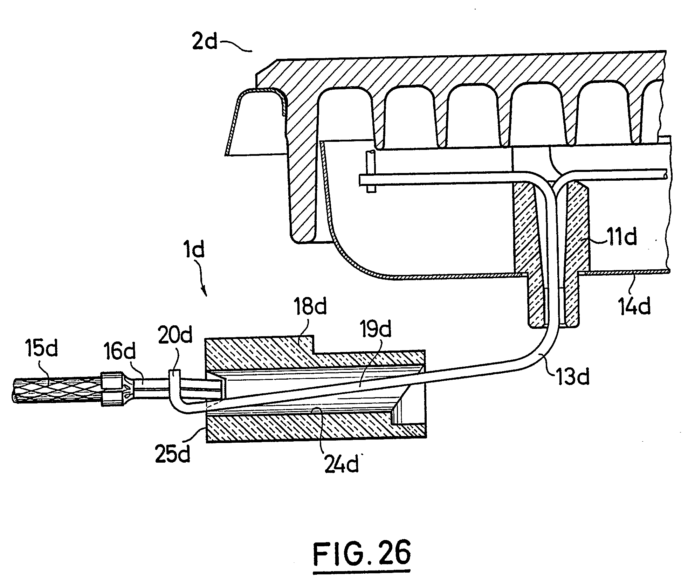

Wie Fig. 26 zeigt, kann der Anschlußleiter 19d auch einteilig mit einem wenigstens einen Teil der Anschlußleitung bildenden Anschlußdraht oder mit dem jeweiligen Anschlußdraht 13d der Elektrokochplatte 2d ausgebildet sein, der durch die zugehörige Durchgangsöffnung 24d des Isolierkörpers 18d hindurchgeführt ist und benachbart zur zugehörigen Endfläche 25d eine Abwinklung als einteilig mit dem Anschlußdraht 13d ausgebildeten Anschlußteil 20d aufweist. Der Isolierkörper 18d kann gleich wie der nach den Fig. 1 bis 11 ausgebildet sein und ist nach der Punktschweiß-Verbindung mit den ankommenden Anschlußteilen 16d entweder in Längsrichtung der Anschlußdrähte 13d veschiebbar oder gegenüber diesen durch die genannten Anschläge lagegesichert. Auch hier können die Anschlußteile 20d in der beschriebenen Weise quer liegen wobei der ankommende Anschlußteil 16d zweckmäßig jeweils an der Oberseite des zugehörigen Anschlußteils 20d befestigt ist.

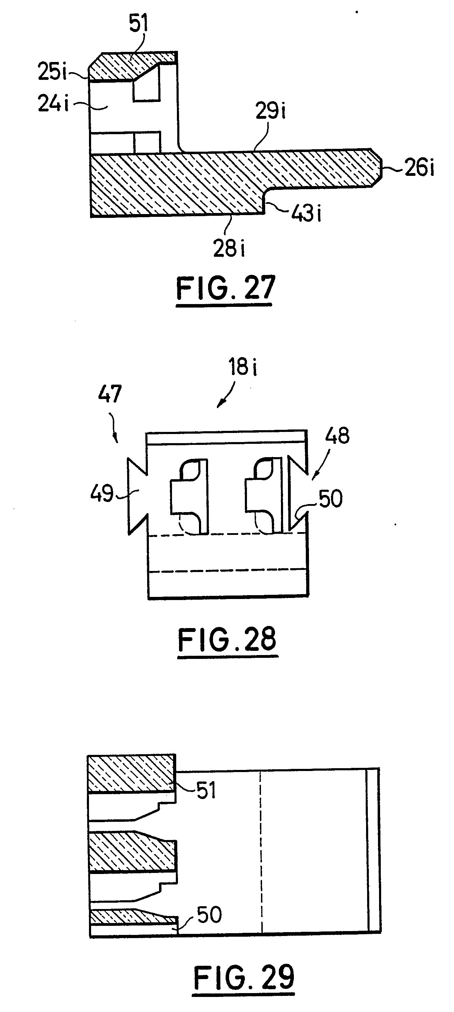

Der Isolierkörper 18i gemäß den Fig. 27 bis 29 weist nicht über seine ganze Länge, sondern nur über eine von der Endfläche 25i ausgehende Teillänge mindestens eine Durchgangsöffnung 24i auf, während er über den restlichen Teil seiner Länge nach Art eines plattenförmigen Vorsprunges ausgebildet ist, der an der von der Durchgangsöffnung 24i abgekehrten Seite die Anschlagschulter 43i aufweist, während er im Bereich der Durchgangsöffnung 24i nach Art eines Gehäuseteiles 51 ausgebildet ist. Dieser Isolierkörper 18i ist an mindestens einer Seite mit einem Verbindungsglied 47 bzw. 48 zur Verbindung mit einem weiteren, insbesondere gleichartigen Isolierkörper versehen. Jeder dieser beiden bzw. der mitein ander zu verbindenden Isolierkörper kann für die Aufnahme eines, zweier oder mehrerer Anschlußleiter bzw. elektrischer Steckverbindungen ausgebildet sein, die in den Fig. 27 bis 29 nicht dargestellt sind. Der Isolierkörper 18i ist für eine zweipolige Steckverbindung ausgebildet, so daß beim Zusammenfügen zweier gleichartiger Isolierkörper 18i ein vierpoliges Anschlußstück gebildet wird. Der Isolierkörper 18i weist nicht nur auf einer Seite, sondern auf beiden Seiten komplementäre Verbindungsglieder in Form eines schwalbenschwanzförmigen Steckgliedes 49 und einer schwalbenschwanzförmigen Steckausnehmung 50 auf, deren zueinander parallele Steckrichtung parallel zur Längsrichtung des Isolierkörpers 18i vorgesehen ist. Dadurch können beliebig viele gleichartige Isolierkörper 18i in einer Reihe aneinandergefügt werden, obwohl auch eine Anordnung der Verbindungsglieder zur beispielsweise sternförmigen Verbindung der Isolierkörper denkbar ist. Die Verbindungsglieder 47, 48 sind zweckmäßig seitlich am Gehäuseteil 51 vorgesehen, obwohl sie bei Ausbildung des Isolierkörpers gemäß einer der übrigen Figuren auch annähernd bis zu dem der Kochplatte zugehörigen Ende des Isolierkörpers reichen bzw. an diesem Ende liegen können. Bei seitlich aneinandergefügten Isolierkörpern 18i liegen diese praktisch ganzflächig aneinander an. Entsprechende Verbindungsglieder könnten auch an dem Isolierstück 44 vorgesehen sein, so daß auch dieses aus modulartigen Bausteinen beliebig vielpolig zusammengesetzt werden kann.

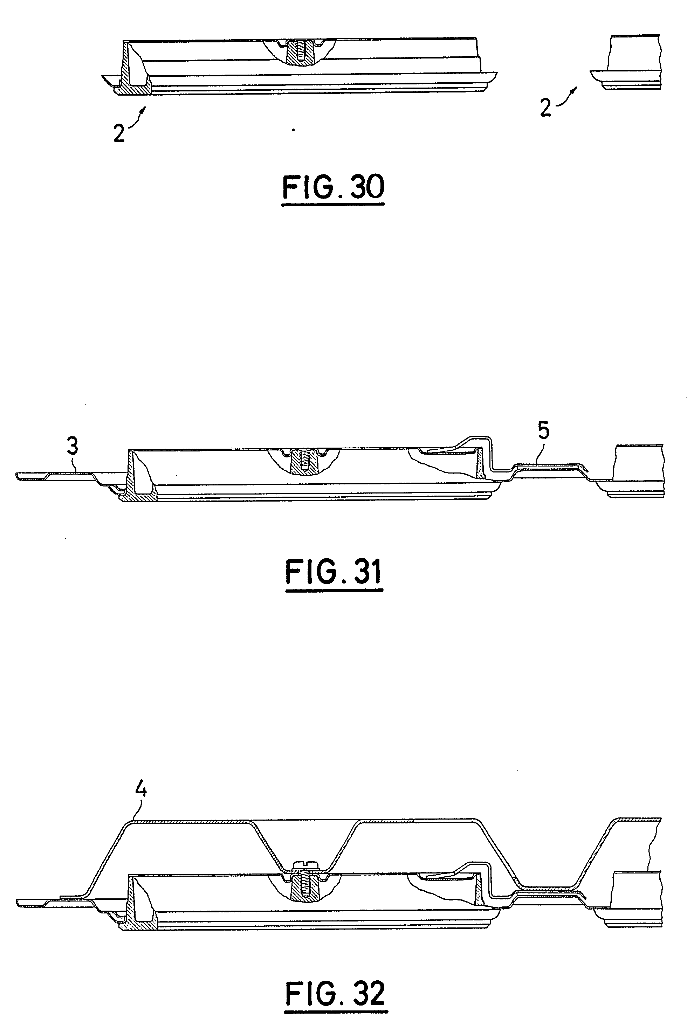

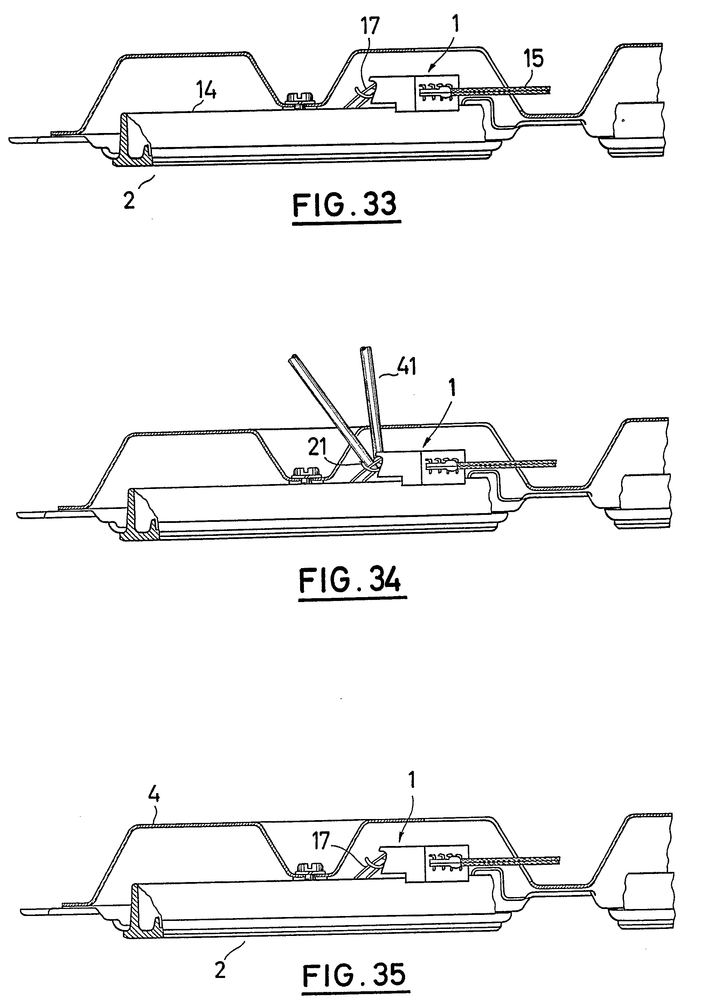

Gemäß den Fig. 30 bis 35 wird bei der Montage der Elektrokochplatte erfindungsgemäß wie folgt verfahren:

Die für die Montage an einer Herdmulde vorgesehenen Elektrokochplatten 2 werden in Kopflage und geometrisch vorbestimmter Anordnung automatisch von einer Palette entnommen und auf einen Montagetisch gelegt. Dann wird die Muldenplatte 3 in Kopflage so über die Elektrokochplatten 2 gestülpt, daß diese in die zugehörigen Öffnungen eingreifen, wobei nach der Muldenplatte 3 oder gemeinsam mit dieser auch der als Stabilisierungsblech ausgebildete Zwischenteil 5 so aufgelegt werden kann, daß an diesem vorgesehene Verdrehschutzfinger in entsprechende Ausnehmungen an den Unterseiten der Elektrokochplatten 2 eingreifen. Daraufhin wird der als Montageblech ausgebildete Spannteil 4 aufgelegt, mit Hilfe der Spannglieder bzw. Schrauben an sämtlichen Elektrokochplatten 2 befestigt und so ein Erdungsanschluß an der Herdplatte angebracht, der mit dem Spannteil 4 vormontiert sein kann oder nach dessen Montage befestigt wird. Mit einem geeigneten Werkzeug werden dann die bis dahin versenkt in einer Vertiefung in der Unterseite der Elektrokochplatte 2 bzw. des Abschlußdeckels 14 liegenden Anschlußteile 17 hochgebogen, wobei dieses Werkzeug durch eine in diesem Bereich in dem Spannteil 4 vorgesehene Fensteröffnung Zugriff hat. Daraufhin wird das mit den Anschlußleitungen 15 vormontierte Anschlußstück durch diese Fensteröffnung in der beschriebenen Weise selbsteinführend in Verbindung mit den Anschlußteilen 17 der Elektrokochplatte 2 gebracht und es werden mit einer automatischen Mehrfach-Schweißzange 41 alle zugehörigen elektrischen Verbindungsstellen gleichzeitig durch Punktschweißung hergestellt. Danach können die Anschlußleitungen 15 bzw. das Anschlußstück 1 noch über eine Zugentlastung festgelegt werden und falls die Erdungsverbindung nicht bereits in der beschriebenen Weise erfolgt ist, kann sie nunmehr an dem Spannteil 4 befestigt werden. Sämtliche Vorgänge können mit Handhabungsautomaten vollmechanisiert vorgenommen werden, was auch für die Anordnung der fertigmontierten Herdplatten in einem Stapel gilt.

## Ansprüche

1. Elektrokochplatten-Anschlußstück (1) mit einem Isolierkörper (18), der mindestens einen elektrischen Anschlußleiter (19) zur Verbindung wenigstens eines Anschlußgliedes (13) der Kochplatte (2) mit mindestens einer Anschlußleitung (15) mittels wenigstens einer elektrischen Verbindungsstelle (22, 23) aufnimmt, dadurch gekennzeichnet, daß mindestens eine Verbindungsstelle (22, 23) einen vorstehenden Anschlußteil (20, 21) des Anschlußleiters (19) für die Verbindung mit einem frei ausragend ankommenden Anschlußteil (16, 17) aufweist.

2. Anschlußstück, insbesondere nach Anspruch 1, dadurch gekennzeichnet, daß wenigstens ein Anschlußteil (20, 21) mindestens eines Anschlußleiters (19) für eine mit dem zugehörigen ankommenden Anschlußteil (16, 17) kreuzende Verbindung ausgebildet ist, daß vorzugsweise benachbart zueinander liegende Anschlußteile (20 bzw. 21) mindestens zweier, insbesondere aller Anschlußleiter (19) für die kreuzende Verbindung ausgebildet sind bzw. im wesentlichen in parallelen Ebenen nebeneinander liegen und daß vorzugsweise mindestens ein Anschlußleiter (19) Anschlußteile (20, 21) für zwei gesonderte Verbindungsstellen (22, 23) einerseits zur Verbindung mit dem Anschlußglied (13) und andererseits mit der Anschlußleitung (15) aufweist, wobei der Anschlußteil (21) für das Anschlußglied (13) und/oder der Anschlußteil (20) für die Anschlußleitung (15) für die kreuzende Verbindung ausgebildet ist.

3. Anschlußstück, insbesondere nach einem der vorhergehenden Ansprüche, dadurch gekennzeichnet, daß mindestens ein Anschlußleiter (19d) im wesentlichen einteilig mit einem Anschlußdraht (13d) der Elektrokochplatte (2d) ausgebildet ist, der insbesondere mit seinem Ende den Anschlußteil (20d) für die kreuzende Verbindung mit der Anschlußleitung (15d) bildet (Fig. 17).

4. Anschlußstück, insbesondere nach einem der vorhergehenden Ansprüche, dadurch gekennzeichnet, daß der Anschlußteil (20, 21) des jeweiligen Anschlußleiters (19) für eine annähernd rechtwinklig kreuzende Verbindung ausgebildet ist, daß vorzugsweise mindestens ein Anschlußteil (20, 21) des Anschlußleiters (19) für eine Verbindung ausgebildet ist, in welcher er quer zum anzuschließenden Anschlußteil (16, 17) auf wenigstens einer Seite von diesem höchstens um seine größte Querschnittsweite bzw. seinen Durchmesser vorsteht und daß vorzugsweise mindestens ein Anschlußteil (20, 21) des Anschlußleiters (19) durch einen im wesentlichen geradlinig frei ausragenden Endabschnitt gebildet ist, wobei insbesondere beide Endabschnitte annähernd zwischen im Winkel bis entgegengesetzt zueinander frei ausragen.

5. Anschlußstück, insbesondere nach einem der vorhergehenden Ansprüche, dadurch gekennzeichnet, daß der Anschlußleiter (19) eine Haupt-Längserstreckung aufweist und daß mindestens ein Anschlußteil (20, 21) des Anschlußleiters (19) quer zu dieser Haupt-Längserstreckung liegt, wobei insbesondere beide Anschlußteile (20, 21) des jeweiligen Anschlußleiters (19) in einer gemeinsam Längs-Mittelebene (27) mit dem übrigen Anschlußleiter (19) vorgesehen sind vorzugsweise mindestens ein Anschlußleiter (19) durch einen zwischen seinen Enden im wesentlichen über seine gesamte Länge konstante Querschnitte aufweisenden Längsabschnitt eines Stranges, wie eines Drahtes gebildet ist bzw. mindestens ein Anschlußleiter (19g) aus einem insbesondere einteilig gestanzten Blechteil besteht, dessen Anschlußteile (20g, 21g) insbesondere mit dem übrigen Anschlußleiter (19g) im wesentlichen in einer Streifenebene liegen.

6. Anschlußstück, insbesondere nach einem der vorhergehenden Ansprüche, dadurch gekennzeichnet, daß der Anschlußleiter (19) annähernd über seine gesamte Länge im wesentlichen in einer einzigen Längs-Mittelebene (27) liegt bzw. zwischen den Anschlußteilen (20, 21) mehrfach in entgegengesetzten Richtungen gekrümmt oder abgewinkelt ist und höchstens ein quer zur Längs-Mittelebene (27) liegendes Ende aufweist, daß vorzugsweise der Anschlußleiter (19) den Isolierkörper (18), insbe sondere in einer schlitzförmig an seine Dicke angepaßten Durchgangsöffnung (24) durchsetzt und durch seitliche Anlage in der Durchgangsöffnung (24) gegen Verdrehen gesichert ist und daß vorzugsweise mindestens ein Anschlußteil (20, 21) des Anschlußleiters (19) über eine zugehörige Endfläche (25, 26) des Isolierkörpers (18) um ein Maß vorsteht, das im wesentlichen größer als die Querschnittsweite des Anschlußteiles ist.

7. Anschlußstück, insbesondere nach einem der vorhergehenden Ansprüche, dadurch gekennzeichnet, daß mindestens eine, insbesondere an der zugehörigen Endfläche (25, 26) des Isolierkörpers (18) vorgesehene, wenigstens eine schräge Einzel-Leitfläche (35) aufweisende Leit-und Ausrichtfläche (30 bzw. 31) für wenigstens einen ankommenden Anschlußteil (16, 17) vorgesehen ist, wobei vorzugsweise jeweils zwei einander gegenüberliegende, im wesentlichen trichterförmig konvergierende Einzel-Leitflächen (35, 36) vorgesehen sind, von denen insbesondere eine, dem Anschlußteil (17) der Kochplatte (2) zugehörige Einzel-Leitfläche (36) im wesentlichen parallel zur Haupt-Längsrichtung des Anschlußleiters (19) liegt.

8. Anschlußstück, insbesondere nach einem der vorhergehenden Ansprüche gekennzeichnet durch mindestens eine, insbesondere an der zugehörigen Endfläche (25, 26) des Isolierkörpers (18) vorgesehene Anschlagfläche (33, 37) für das Ende wenigstens eines ankommenden Anschlußteiles (16, 17), wobei vorzugsweise mindestens eine Anschlagfläche (33,37) eine die zugehörigen Einzel-Leitflächen (35, 36) verbindende Bodenfläche einer Ausnehmung ist.

9. Anschlußstück, insbesondere nach Anspruch 7 oder 8, dadurch gekennzeichnet, daß mindestens eine der Leitflächen (35, 36) an einem Ende des Isolierkörpers (18), insbesondere an dem der Kochplatte (2) zugehörigen Ende, durch eine über alle an diesem Ende vorgesehenen Anschlußteile (21) durchgehende Ausnehmung, wie eine über die Breite des Isolierkörpers durchgehende Nut (34) gebildet ist und/oder daß mindestens eine Leitfläche an einem Ende des Isolierkörpers (18), insbesondere an dem den Anschlußleitungen (15) zugehörigen Ende, durch eine für den jeweils zugehörigen Anschlußteil (16) gesonderte Zentrierausnehmung (32) gebildet ist, die seitlich im wesentlichen an die zugehörige Durchgangsöffnung (24) anschließt.

10. Anschlußstück, insbesondere nach einem der vorhergehenden Ansprüche, dadurch gekennzeichnet, daß der Isolierkörper (18) durch einen Flachkörper gebildet ist, der vorzugsweise an der oberen Flachseite (28) zur Bildung einer Anlagefläche für die Unterseite der Kochplatte (2) abgesetzt ist.

11. Anschlußstück, insbesondere nach einem der vorhergehenden Ansprüche, dadurch gekennzeichnet, daß der Anschlußteil (16) wenigstens einer Anschlußleitung (15) durch eine Aderendhülse gebildet und/oder mindestens ein Anschlußteil (16, 17, 20, 21) als Schweißverbinder, insbesondere für eine Punktschweißung, ausgebildet ist und/oder daß mindestens ein beispielsweise der Anschlußleitung (15e) zugehöriger Anschlußteil (20e), ein Anschluß-Steckglied, wie eine Flachsteckzunge, aufweist, das insbesondere einen Längsanschlag für den Anschlußleiter (19e) bildet, wobei vorzugsweise wenigstens ein Steckglied (20e) durch einen gesonderten, am zugehörigen abgewinkelten Ende (42) des Anschlußleiters (19e) befestigten und in den Isolierkörper (18e) im wesentlichen zentriert eingreifenden oder einteilig mit dem Anschlußleiter (19g) ausgebildeten Bauteil gebildet ist.

12. Anschlußstück, insbesondere nach einem der vorhergehenden Ansprüche, dadurch gekennzeichnet, daß mindestens ein Isolierkörper (18i) für höchstens zwei Anschlußleiter mindestens ein Verbindungsglied (47, 48), insbesondere beiderseits seitlich komplementäre Steckglieder (49, 50) für die Verbindung mit wenigstens einem weiteren gleichartigen Isolierkörper aufweist.

13. Anschlußstück, insbesondere nach einen der vorhergehenden Ansprüche, gekennzeichnet durch ein gehäuseförmiges Isolierstück (44) für die Aufnahme mindestens eines ankommenden Anschlußteiles (16h) der Anschlußleitungen (15h), wobei das Isolierstück (44) vorzugsweise im wesentlichen gleiche Querschnittform der Außenfläche wie der Isolierkörper (18h) des Anschlußstückes (1h) aufweist.

FIG.2

FIG.1

EP 0 304 906 A2

FIG. 3

FIG.4

FIG.5

FIG.6

FIG.7

FIG.8

FIG.9

FIG.10

FIG.11

EP 0 304 906 A2

**FIG.14**

**FIG.12**

**FIG. 13**

**FIG.15**

**FIG.16**

**FIG.17**

**FIG.18**

**FIG.19**

**FIG.20**

**FIG.21**

**FIG.22**

**FIG.23**

FIG. 24

FIG. 25

FIG.26

**FIG. 27**

**FIG. 28**

**FIG. 29**

FIG. 30

FIG. 31

FIG. 32

EP 0 304 906 A2

**FIG. 33**

**FIG. 34**

**FIG. 35**